# FASCICULE DE BREVET EUROPEEN

(11) **EP 0 606 511 B1**
(45) Date de publication et mention de la délivrance du brevet: **11.12.1996**
(21) Numéro de dépôt: 93100542.5
(22) Date de dépôt: 15.01.1993
(51) Int. Cl.: B60C 23/04

(54) **Dispositif et système avertisseur du sous-gonflage d'un pneumatique et roue spécialement développée**
Warnvorrichtung und -anlage für Reifenunterdruck und speziell dafür ausgebildetes Rad
Warning device and system for underinflated tyres and a specially developed wheel therefore

(43) Date de publication de la demande: 20.07.1994
(73) Titulaire: COMPAGNIE GENERALE DES ETABLISSEMENTS MICHELIN-MICHELIN & CIE, F-63040 Clermont-Ferrand Cédex (FR)
(72) Inventeur: Pradelle, Antoine, F-63800 Cournon-d'Auvergne (FR)
(74) Mandataire: Bauvir, Jacques

(56) Documents cités:
- DE-A- 3 541 494
- US-A- 3 129 690
- US-A- 4 082 056
- US-A- 4 742 712

## Description

L'invention concerne les dispositifs de surveillance de pneumatiques. Plus particulièrement, elle se rapporte à un dispositif, simple et peu coûteux, avertisseur du sous-gonflage d'un pneumatique.

De très nombreux dispositifs ont été présentés pour avertir le conducteur d'un véhicule d'une chute de pression à l'intérieur de l'un de ses pneumatiques.

La majeure partie de ces dispositifs utilise des capteurs de mesure de pression et/ou de température placés dans la jante du pneumatique. Ces capteurs transmettent leurs mesures en continu, ou lorsque un seuil est franchi, vers un boîtier central. De tels dispositifs sont décrits dans les demandes WO 87/00127, DE 2 923 258 ou US 4 052 696, par exemple. La nécessité, pour tous ces dispositifs, de transmettre les mesures des capteurs, situés dans la roue en rotation, vers le châssis du véhicule, conduit, pour être fiable, à des systèmes d'un coût élevé réservé à des véhicules haut de gamme.

Un dispositif plus simple est décrit par la demande de brevet DE 3 541 494. Son principe consiste à utiliser, pour avertir de la chute de pression, l'évolution du comportement vibratoire de la roue lorsque la pression de gonflage du pneumatique diminue au moyen d'un capteur de vibrations placé à proximité du porte-roue. Malheureusement, la complexité et la progressivité de l'évolution de ce comportement vibratoire de la roue avec la pression de gonflage du pneumatique entraînent une faible sensibilité de ce dispositif. De plus, son étalonnage varie en fonction à la fois du type de pneumatique et du type de véhicule.

L'invention a pour but de remédier aux inconvénients signalés ci-dessus au moyen d'un dispositif avertisseur du sous-gonflage d'un pneumatique ne nécessitant pas de transmettre de signaux de mesure entre la roue et le châssis du véhicule, tout en offrant une grande sensibilité.

L'invention a pour objet un dispositif avertisseur du sous-gonflage d'un pneumatique, simple, peu coûteux et adaptable aisément à tous les véhicules automobiles actuels.

Ce dispositif, à monter sur la roue du pneumatique, est caractérisé en ce qu'il crée un balourd au niveau de ladite roue, lorsque la pression de gonflage dudit pneumatique est en dessous d'un seuil donné.

La création de ce balourd entraîne, en roulage, l'apparition de vibrations de fortes amplitudes au niveau de la roue, ce qui, par l'intermédiaire du châssis, des suspensions et de la direction du véhicule, va avertir le conducteur de l'existence d'un sous-gonflage.

Plus particulièrement, ce dispositif est caractérisé en ce qu'il comprend un moyen de décentrement d'une masse mobile lorsque la pression de gonflage est en dessous d'un seuil donné.

Un mode de réalisation de ce dispositif est caractérisé en ce que le moyen de décentrement comprend :
- un corps fixe comportant deux chambres séparées par une masse mobile, la première desdites chambres est reliée au pneumatique et a une pression égale à la pression de gonflage dudit pneumatique, la seconde est à la pression atmosphérique ;
- un moyen de verrouillage de ladite masse mobile tel que ladite masse mobile soit bloquée, lorsque la pression de gonflage du pneumatique est supérieure à un seuil donné, et soit libérée, de façon à pouvoir se décentrer, lorsque la pression de gonflage est inférieure audit seuil.

Ce mode de réalisation est de plus caractérisé en ce que la masse mobile a, dans un plan comprenant l'axe de déplacement, une section droite en forme de U et en ce que le moyen de verrouillage de la masse mobile comprend :
- au moins une bille, placée dans la paroi de la masse mobile orientée selon l'axe de déplacement, de diamètre supérieur à l'épaisseur de ladite paroi et dont le logement l'autorise à venir tangenter intérieurement et extérieurement ladite paroi de la masse mobile ;
- au moins un évidement réalisé dans la paroi du corps fixe à une position telle qu'elle permet à ladite bille de s'incruster à l'intérieur lorsque la masse mobile est plaquée contre le fond du corps fixe du côté de la chambre atmosphérique et lorsque ladite bille tangente la surface intérieure de la paroi de ladite masse mobile ;
- une membrane élastique reliée de façon étanche aux extrémités de la masse mobile, du côté de la chambre dont la pression interne est la pression de gonflage, terminée par une pièce de blocage dont la géométrie extérieure est adaptée à celle du fond de la masse mobile avec une hauteur telle que, placée contre le fond de ladite masse mobile, elle recouvre le logement de la bille.

En roulage, la masse mobile libérée va, sous l'action des forces centrifuges, se décentrer rapidement et ainsi créer un balourd dynamique au niveau de la roue.

Un perfectionnement au mode de réalisation précédent de l'invention est caractérisé en ce que le dispositif avertisseur du sous-gonflage d'un pneumatique comporte un moyen de limitation de la pression de gonflage dudit pneumatique, lors du gonflage.

Le moyen de limitation de la pression de gonflage, lors du gonflage, est caractérisé en ce que la pièce de blocage de la masse mobile vient s'appuyer sur l'extrémité d'une tige dont l'autre extrémité se termine par un pointeau de fermeture du conduit d'arrivée de l'air de gonflage du pneumatique, et ainsi bloque ledit conduit lorsque la pression de gonflage atteint la pression nominale dudit pneumatique.

Ce perfectionnement permet d'assurer un gonflage à la pression nominale du pneumatique sûr et simple.

Un second perfectionnement au mode de réalisation de l'invention précédent est caractérisé en ce qu'il comporte un moyen d'alerte de la libération de la masse mobile.

L'avantage de ce perfectionnement est qu'il permet d'avertir, à l'arrêt, le conducteur du véhicule du sous-gonflage de l'un de ses pneumatiques par un simple examen visuel du dispositif ou par une alarme intérieure selon la nature, connue en soi, du moyen d'alerte choisi.

Le montage de l'un quelconque des dispositifs précédents avertisseurs du sous-gonflage d'un pneumatique sur le disque de roue dudit pneumatique est caractérisé en ce que, la masse mobile étant en position bloquée, le centre de gravité dudit dispositif est placé sur l'axe de la roue dudit pneumatique.

Un second mode de réalisation d'un dispositif avertisseur du sous-gonflage d'un pneumatique selon l'invention est caractérisé en ce que le moyen de décentrement comprend :
- un corps fixe tubulaire disposé en spirale autour d'un point O dans lequel peut se déplacer un corps mobile et qui est raccordé, du côté de son extrémité la plus proche dudit point O, à une chambre reliée au pneumatique et ayant une pression égale à la pression de gonflage dudit pneumatique ;
- un moyen de verrouillage de ladite masse mobile tel que ladite masse mobile soit bloquée, lorsque la pression de gonflage du pneumatique est supérieure à un seuil donné, et soit libérée, de façon à pouvoir se décentrer, lorsque la pression de gonflage est inférieure audit seuil.

Ce second mode de réalisation a l'avantage d'être mécaniquement plus simple et plus aisé à installer sur une roue que le précédent.

Une dernière caractéristique de l'invention est l'utilisation de l'un quelconque des dispositifs précédents en combinaison avec un capteur de vibrations placé sur le porte-roue de la roue dudit pneumatique.

On entend par "porte-roue" la pièce qui porte effectivement la roue sans aucun autre découplage que la rotation de roulement de la roue.

Le système avertisseur de sous-gonflage ainsi constitué est simple, peu coûteux, d'une grande sensibilité et fiable. En effet, l'apparition brutale d'un balourd dynamique lorsque la pression de gonflage diminue en dessous d'un seuil donné est aisément détectée par le capteur de vibrations. Ce système s'affranchit ainsi de la complexité de l'évolution du comportement vibratoire de la roue avec la variation de la pression de gonflage.

Plusieurs exemples de réalisation de l'invention sont maintenant décrits en s'appuyant sur les dessins annexés suivants :
- la figure 1 présente une vue en coupe axiale d'un dispositif avertisseur de sous-gonflage, le pneumatique n'étant pas gonflé ;
- la figure 2 est une vue en coupe similaire à la figure 1, le pneumatique étant à la pression seuil de gonflage ;
- la figure 3 présente une vue en coupe axiale d'un second dispositif avertisseur de sous-gonflage équipé d'un moyen de limitation de la pression au gonflage, le pneumatique étant à sa pression nominale de gonflage ;
- la figure 4 est une vue en coupe axiale d'un dispositif avertisseur de sous-gonflage équipé d'un moyen d'alerte visuelle du déblocage de la masse mobile ;
- la figure 5 représente une vue en coupe d'un second mode de réalisation selon l'invention ;
- la figure 6 est une vue selon A en coupe tel qu'indiqué à la figure 5 du moyen de verrouillage de la masse mobile du second mode de réalisation ;
- la figure 7 présente un schéma d'installation du système avertisseur de sous-gonflage sur un essieu de véhicule.

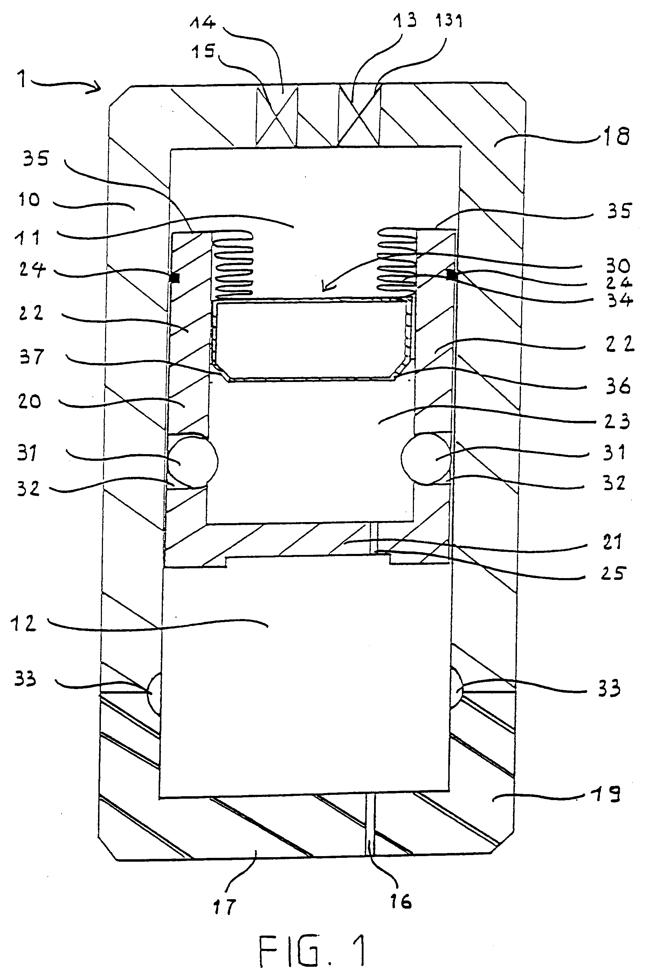

Un exemple de réalisation de l'invention est représenté à la figure 1. Le dispositif avertisseur de sous-gonflage 1 comprend un corps fixe 10, une masse mobile 20 et un moyen de verrouillage 30 de ladite masse mobile 20.

Le corps fixe 10, cylindrique, comporte une cavité interne où se déplace la masse mobile 20. Cette masse mobile 20 sépare ladite cavité interne en deux chambres 11 et 12. La chambre 11 est pneumatiquement reliée au pneumatique par l'intermédiaire du conduit 13, elle est donc pressurisée à la pression de gonflage dudit pneumatique. La chambre 12 est reliée à l'atmosphère par le conduit 16, sa pression interne est donc en permanence la pression atmosphérique.

Le dispositif 1 peut optionnellement être utilisé pour gonfler le pneumatique. Dans ce cas, la chambre 11 comporte un second conduit 14 équipé d'une valve anti-retour 15 s'opposant au dégonflage du pneumatique. Pour éviter un dégonflage accidentel du pneumatique en cas de fuite de la chambre 11 et lorsque le dispositif 1 est utilisé pour le gonflage, la liaison pneumatique entre le dispositif 1 et le pneumatique peut être équipée d'une valve anti-retour 131. Cette valve 131 se place en un point quelconque de ladite liaison par exemple au niveau du conduit 13 comme sur les figures 1 à 4. Cependant, on la met préférentiellement au niveau de la valve de la jante dudit pneumatique.

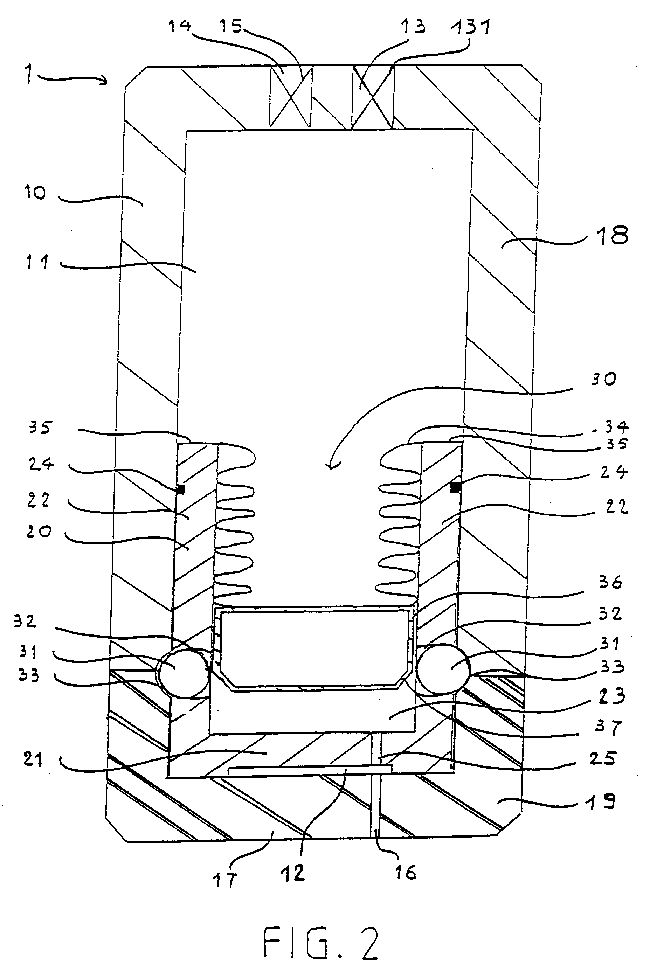

La masse mobile 20, à symétrie axiale, a une section axiale en forme de U. Le fond 21 et les barres 22 du U forment une cavité 23 à l'intérieur de ladite masse mobile 20. Le joint 24 assure l'étanchéité entre les deux chambres 11 et 12. Le moyen de verrouillage 30 de la masse mobile 20 comprend :
- deux billes 31 placées symétriquement dans la paroi de la masse mobile 20 orientée selon l'axe de déplacement, de diamètre supérieur à l'épaisseur de ladite paroi et dont les logements 32 les autorisent à venir tangenter les surfaces intérieure et extérieure de ladite paroi de la masse mobile 20 ; les logements 32 ont du côté de la cavité 23 un diamètre extérieur inférieur à celui des billes 31 de sorte qu'elles ne puissent pas quitter lesdits logements 32 ;
- un évidement 33 réalisé de préférence circonférentiellement dans la paroi intérieure du corps fixe 10 à une position telle qu'elle permette auxdites billes 31 de s'incruster à l'intérieur lorsque la masse mobile 20 est plaquée contre le fond du corps fixe 10 du côté de la chambre atmosphérique 12 et lorsque lesdites billes 31 tangentent la surface intérieure de la paroi de ladite masse mobile 20 (figure 2) ;
- une membrane élastique 34 reliée de façon étanche à l'extrémité 35 de la paroi de la masse mobile 20 orientée selon l'axe de déplacement, du côté de la chambre 11 pressurisée ; ladite membrane élastique 34 est terminée par une pièce de blocage 36 dont la géométrie extérieure est adaptée à celle du fond 21 de la masse mobile 20 avec une hauteur telle que, placée contre le fond 21 de ladite masse mobile 20, elle recouvre les logements 32 des billes (figure 2) ; la pièce de blocage 36 comprend un chanfrein 37 ; le conduit 25 traverse le fond 21 de la masse mobile 20 et ramène à la pression atmosphérique la partie de la cavité 23 située entre la pièce de blocage 36 et le fond 21 de la masse mobile 20.

Le corps fixe 10 est réalisé en deux parties 18 et 19 assemblées par collage après l'insertion de la masse mobile 20 et du moyen de verrouillage 30. Le choix des matériaux de ces deux parties 18 et 19 est tel que, lorsque la masse mobile 20 est en position bloquée, le centre de gravité de ladite masse mobile 20 reste décentré par rapport à celui du dispositif 1 du côté de la chambre pressurisée 11.

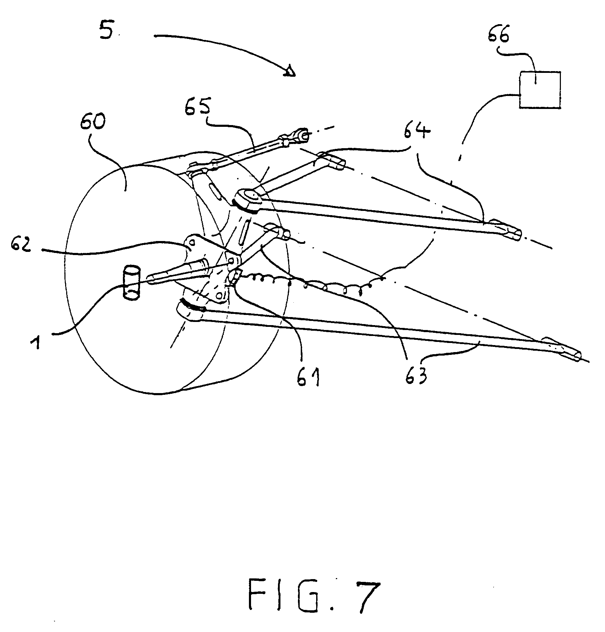

Le dispositif avertisseur du sous-gonflage 1 est prévu pour être monté sur le disque de roue d'un pneumatique de telle sorte que, la masse mobile étant en position bloquée, le centre de gravité dudit dispositif 1 soit placé sur l'axe de la roue dudit pneumatique et l'axe de déplacement de la masse mobile 20 soit non-parallèle avec l'axe de rotation de la roue (figure 7). Dans le cas d'une roue classique, les connections pneumatiques sont protégées sous un enjoliveur. On peut aussi prévoir des roues moulées incorporant, dès leur conception, le dispositif 1.

Le fonctionnement du dispositif avertisseur de sous-gonflage 1 est maintenant décrit à l'aide des figures 1 et 2 :
- lors du gonflage :
   - sous l'action d'une pression de gonflage supérieure à la pression atmosphérique, et ce, quelle que soit l'orientation du dispositif 1 par rapport à la verticale, la masse mobile 20 est plaquée contre le fond 17 du corps fixe 10 du côté de la chambre 12 à pression atmosphérique et la membrane élastique 34 se déploie progressivement dans la cavité 23 ;
   - lorsque la pression de gonflage devient égale à un seuil donné, le chanfrein 37 de la pièce de blocage 36 repousse les deux billes 31 dans leurs logements 32 et les incruste dans l'évidement circonférentiel 33 de la paroi du corps fixe 10 ; la masse mobile 20 est ainsi bloquée (figure 2) ; enfin, à une pression proche de ladite pression seuil, la pièce de blocage 36 est plaquée contre le fond 21 de la masse mobile 20 ;
- en service :
   - lorsque la pression de gonflage devient proche du seuil donné, la membrane élastique 34 se contracte, la pièce de blocage 36 s'écarte du fond 21 de la masse mobile 20 , et, à la pression seuil, n'incruste plus les deux billes 31 dans l'évidement circonférentiel 33 pratiqué dans la paroi dudit corps fixe 10, la masse mobile 20 est alors libérée et sous l'action des efforts centrifuges dus au roulage du pneumatique et au décalage du centre de gravité de la masse mobile 20 par rapport à l'axe de la roue se décentre rapidement ce qui crée un balourd au niveau de la roue (figure 1).

A titre d'exemple, la pression nominale de gonflage du pneumatique étant de l'ordre de deux bars, la pression seuil de sécurité peut être choisie égale à 1,5 bars et la pression dite proche à 1,6 bars.

La pièce de blocage 36 est réalisée de telle sorte que son poids soit très faible pour que son inertie soit négligeable et n'entraîne pas de déverrouillage accidentel à la suite de chocs.

Le dispositif 1 précédent permet donc de créer un balourd dynamique au niveau de la roue du pneumatique lorsque la pression de gonflage diminue en dessous du seuil de sécurité choisi et ce balourd entraîne des vibrations qui vont à leur tour avertir le conducteur de l'existence du sous-gonflage. C'est un avantage particulièrement intéressant du dispositif 1 que d'interdire tout roulage à une vitesse élevée donc dangereuse car ces vibrations transmises par la direction au conducteur sont insupportables à vitesse élevée tout en n'interdisant pas un roulage à vitesse modérée. La sécurité apportée par ce dispositif 1 est donc bien supérieure à celle liée à une simple alerte au tableau de bord, souvent négligée par les conducteurs.

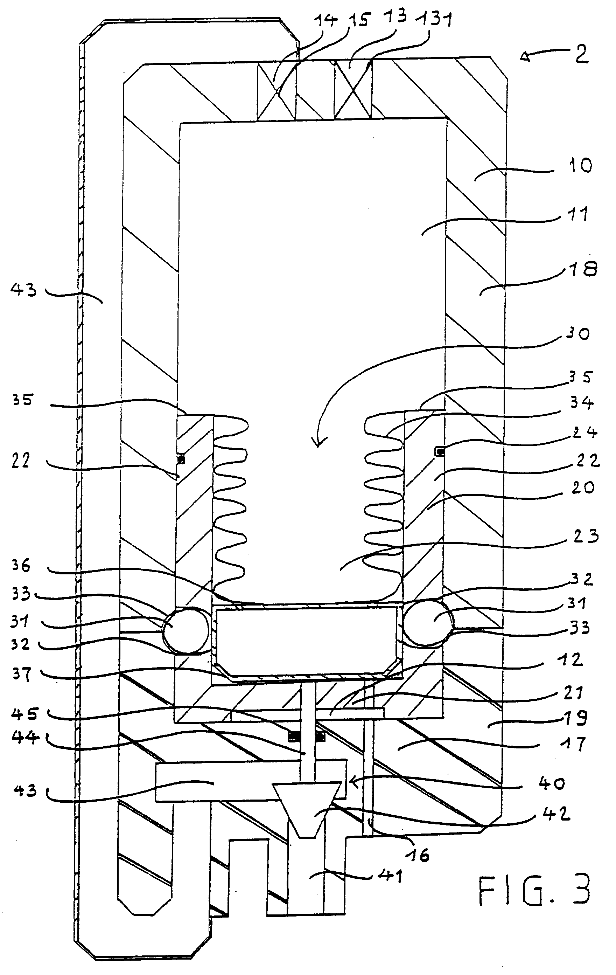

Un perfectionnement au mode de réalisation précédent est présenté à la figure 3. Ce dispositif avertisseur de sous-gonflage 2 est équipé d'un moyen de limitation de la pression de gonflage 40, lors du gonflage.

Le corps fixe 10 de ce second dispositif avertisseur de sous-gonflage 2 comprend en plus un conduit d'arrivée d'air de gonflage 41 qui peut être obturé par un pointeau 42, une conduite 43 reliant l'arrivée d'air 41 précédente au conduit d'entrée 14 de la chambre pressurisée 11. Le pointeau 42 est prolongé par une tige 44 qui traverse le fond 17 du corps fixe 10 ainsi que le fond 21 de la masse mobile 20 lorsque celle-ci est plaquée contre le fond 17 par la pression de gonflage. Le joint 45 assure l'étanchéité entre la chambre 12 et la conduite 43.

Le fonctionnement du dispositif avertisseur de sous-gonflage 2 est proche de celui du dispositif 1 pour tout ce qui concerne les conditions de blocage et de libération de la masse mobile 20 en fonction de la pression de gonflage du pneumatique. La seule différence est que la "pression proche" de la pression seuil précédente est maintenant la pression nominale du pneumatique.

Lors du gonflage du pneumatique à partir de l'arrivée d'air 41, la pression d'arrivée d'air repousse le pointeau 42 et peut ainsi pénétrer dans la chambre 11 puis dans le pneumatique par l'intermédiaire du conduit 13. Après avoir bloqué la masse mobile 20 à la pression seuil de gonflage, la pièce de blocage 36 est appliquée contre l'extrémité de la tige 44 du pointeau 42 et déplace progressivement ledit pointeau 42 jusqu'à la fermeture de l'arrivée d'air 41 qui intervient à la pression nominale de gonflage du pneumatique.

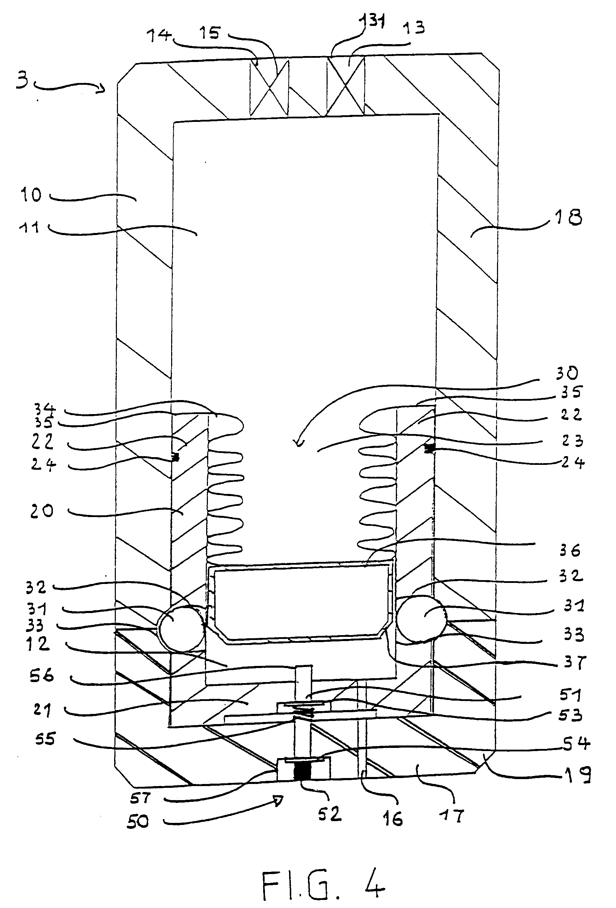

Un second perfectionnement au mode de réalisation de l'invention consiste à équiper le dispositif avertisseur de sous-gonflage 1 d'un moyen d'alerte du déblocage de la masse mobile 20. La figure 4 en présente un exemple de réalisation. Ce dispositif avertisseur de sous-gonflage 3 est équipé d'un moyen d'alerte visuelle 50 du déblocage de la masse mobile 20.

Le moyen d'alerte visuelle 50 comprend une tige 51 traversant le fond 17 du corps fixe 10 ainsi que le fond 21 de la masse mobile 20, lorsque ladite masse mobile 20 est plaquée contre le fond 17, et terminée, vers l'extérieur du dispositif 3, par une pastille de couleur vive 52. Le déplacement de ladite tige 51 est limité par deux butées 53 et 54 de part et d'autre du fond 17 du corps fixe 10, ainsi que par un ressort de rappel 55 placé entre la butée 53 et le côté intérieur du fond 17.

Lorsque la pression de gonflage du pneumatique est supérieure à la pression seuil et ainsi la masse mobile 20 est bloquée, la pièce de blocage 36 appuie sur l'extrémité 56 interne de la tige 51 et repousse vers l'extérieur du dispositif 3 la pastille 52. Ladite pastille 52 est complètement sortie lorsque la pièce de blocage 36 est plaquée contre le fond 21 de la masse mobile 20, soit quand la pression de gonflage est égale à la "pression proche" précédente. Lorsque la pression de gonflage diminue en dessous de cette "pression proche" du seuil de gonflage précédent, la membrane élastique 34 se contracte, la pièce de blocage 36 s'écarte du fond 17 du corps fixe et ainsi permet au ressort de rappel 55 de ramener vers l'intérieur la tige 51, la pastille 52 est alors cachée dans l'évidement 57. Cette pastille 52 est donc un témoin du gonflage correct du pneumatique et son retrait indique une pression insuffisante, que la masse mobile 20 se soit décentrée ou non.

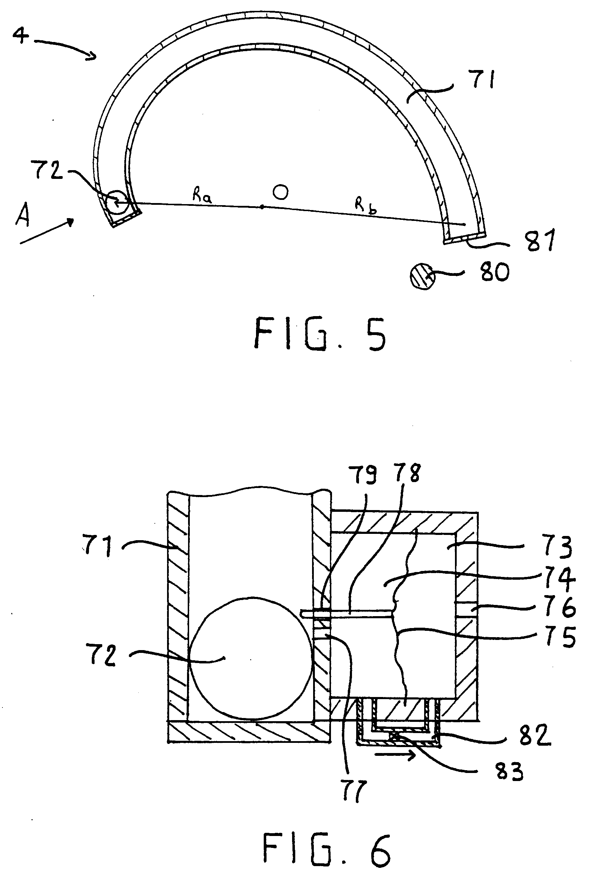

Les figures 5 et 6 présentent un second mode de réalisation selon l'invention. Le dispositif 4 comporte un corps fixe 71 tubulaire disposé en spirale autour du point O. A l'intérieur du corps fixe 71, peut se déplacer une bille 72 qui est la masse mobile. A l'extrémité du corps fixe 71 la plus proche du point O, à une distance Rₐ, se trouve un dispositif de verrouillage (90) de la bille 72. Ce dispositif de verrouillage (figure 6) comprend deux chambres 73 et 74 séparées par une membrane élastique étanche 75. La chambre 73 est reliée au pneumatique par l'intermédiaire du conduit 76 et est donc à la pression de gonflage du pneumatique. La chambre 74 est, elle, en communication avec le corps fixe 71 par le conduit 77, sa pression est ainsi normalement égale à la pression atmosphérique. Une tige 78 est fixée à la membrane élastique 75 et est poussée à travers l'orifice 79 dans le corps fixe 71 lorsque la différence de pression entre les deux chambres 73 et 74 est suffisante venant ainsi bloquer tout déplacement de la bille 72.

Une masse 80 est placée du côté du corps fixe 71 le plus éloigné du point O, à une distance R_{b}, pour équilibrer le dispositif 4 et assurer que, la bille 72 étant en position bloquée, son centre de gravité se trouve en O.

Ce dispositif 4 peut avantageusement être aussi utilisé pour gonfler le pneumatique au moyen d'une valve 81 placée à l'extrémité du corps fixe 71 la plus éloignée du point O et d'un conduit 82 reliant les deux chambres 73 et 74 équipé d'une valve anti retour 83.

Lors du gonflage, le flux d'air traversant le corps fixe 71 plaque la bille contre l'extrémité dudit corps fixe 71 la plus proche du point O et, dès que le pneumatique est correctement gonflé, l'ouverture de la valve 81 ramène la pression dans la chambre 73 à la pression atmosphérique, la chambre 74 restant à la pression de gonflage du pneumatique. La différence de pression entre les deux chambres déforme la membrane 75, repousse la tige 78 dans le corps fixe 71 et bloque la bille 72.

La membrane 75 est étalonnée pour libérer la bille 72 dès que la pression de gonflage devient inférieure à une pression seuil donnée. Les forces centrifuges dues au roulage déplacent alors immédiatement la bille 72 jusqu'à l'autre extrémité du corps fixe 71 à cause de la différence de rayon. Comme précédemment, ce déplacement entraîne l'apparition d'un balourd dynamique sensible par le conducteur.

Comme précédemment, ce dispositif 4 est prévu pour être monté sur une roue de pneumatique, entre la jante et le disque de roue, en utilisant des moyens de montage adaptés et connus, de telle sorte que, la bille 72 étant en position bloquée, son centre de gravité soit placé sur l'axe de ladite roue.

Un autre perfectionnement de l'invention consiste à utiliser l'un quelconque des dispositifs avertisseurs de sous-gonflage 1, 2, 3, 4, précédents en combinaison avec un capteur de vibrations 61 placé sur le porte-roue 62 de la roue du pneumatique.

La figure 7 présente les éléments de suspension d'une roue directrice : porte-roue 62, triangle inférieur de suspension 63, triangle supérieur de suspension 64, biellette de direction 65 et ensemble 60 pneumatique et roue équipée d'un dispositif avertisseur de sous-gonflage 1, 2, 3 ou 4. Le capteur de vibrations 61 peut être placé sur l'un quelconque des éléments de suspension du véhicule : triangle inférieur 63, triangle supérieur 64, biellette de direction 65 et porte-roue 62. La disposition sur le porte-roue 62 est cependant préférable car les informations transmises par le capteur 61 sont le moins filtrées. Les mesures du capteur 61 sont transmises à un boîtier central 66 relié aux quatre systèmes avertisseurs 5 du véhicule. Les mesures sont alors analysées et les alertes transmises au conducteur par des moyens connus.

La détection aisée du balourd dynamique induit par les dispositifs avertisseurs de sous-gonflage 1, 2, 3, 4, précédents par le capteur de vibrations 61 autorise la diminution du seuil de balourd détectable et ainsi une miniaturisation desdits dispositifs avertisseurs 1, 2, 3, 4.

## Revendications

1. Dispositif (1, 2, 3, 4) avertisseur du sous-gonflage d'un pneumatique, à monter sur la roue dudit pneumatique, caractérisé en ce qu'il crée un balourd au niveau de ladite roue, lorsque la pression de gonflage du pneumatique est en dessous d'un seuil donné.

2. Dispositif (1, 2, 3, 4) avertisseur du sous-gonflage d'un pneumatique selon la revendication 1, caractérisé en ce qu'il comprend un moyen de décentrement d'une masse mobile (20) lorsque la pression de gonflage dudit pneumatique est en dessous d'un seuil donné.

3. Dispositif (1, 2, 3) avertisseur du sous-gonflage d'un pneumatique selon la revendication 2, caractérisé en ce que le moyen de décentrement comprend :
- un corps fixe (10) comportant deux chambres (11, 12) séparées par une masse mobile (20), la première desdites chambres (11) est reliée au pneumatique et a une pression égale à la pression de gonflage dudit pneumatique, la seconde (12) est à la pression atmosphérique ;
- un moyen de verrouillage (30) de ladite masse mobile (20) tel que ladite masse mobile (20) soit bloquée, lorsque la pression de gonflage du pneumatique est supérieure à un seuil donné, et soit libérée de façon à pouvoir se décentrer lorsque la pression de gonflage est inférieure audit seuil.

4. Dispositif (1, 2, 3) avertisseur du sous-gonflage d'un pneumatique selon la revendication 3, caractérisé en ce que, la masse mobile (20) étant en position bloquée, le centre de gravité de ladite masse mobile (20) est décalé par rapport au centre de gravité du dispositif (1) du côté de la chambre pressurisée (11).

5. Dispositif (1, 2, 3) avertisseur du sous-gonflage d'un pneumatique selon la revendication 4, caractérisé en ce que la masse mobile (20) a, dans un plan comprenant l'axe de déplacement, une section droite en forme de U et en ce que le moyen de verrouillage (30) de la masse mobile (20) comprend :
- au moins une bille (31), placée dans la paroi de la masse mobile (20) orientée selon l'axe de déplacement, de diamètre supérieur à l'épaisseur de ladite paroi et dont le logement (32) l'autorise à venir tangenter intérieurement et extérieurement ladite paroi de la masse mobile (20) ;
- au moins un évidement (33) réalisé dans la paroi du corps fixe (10) à une position telle qu'elle permet à ladite bille (31) de s'incruster à l'intérieur lorsque la masse mobile (20) est plaquée contre le fond (17) du corps fixe (10) du côté de la chambre atmosphérique (12) et lorsque ladite bille (31) tangente la surface intérieure de la paroi de ladite masse mobile (20) ;
- une membrane élastique (34) reliée de façon étanche aux extrémités (35) de la masse mobile (20), du côté de la chambre (11) dont la pression interne est la pression de gonflage, terminée par une pièce de blocage (36) dont la géométrie extérieure est adaptée à celle du fond (21) de la masse mobile (20) avec une hauteur telle que, placée contre le fond (21) de ladite masse mobile (20), elle recouvre le logement (32) de la bille (31).

6. Dispositif (2) avertisseur du sous-gonflage d'un pneumatique selon l'une des revendications 1 à 5, caractérisé en ce qu'il comporte un moyen de limitation de la pression de gonflage (40) dudit pneumatique, lors du gonflage.

7. Dispositif (2) avertisseur du sous-gonflage d'un pneumatique selon les revendications 5 et 6, caractérisé en ce que la pièce de blocage (36) de la masse mobile (20) vient s'appuyer sur l'extrémité d'une tige (44) dont l'autre extrémité se termine par un pointeau (42) de fermeture du conduit (41) d'arrivée de l'air de gonflage du pneumatique, et ainsi bloque ledit conduit (41) lorsque la pression de gonflage atteint la pression nominale dudit pneumatique.

8. Dispositif (3) avertisseur du sous-gonflage d'un pneumatique selon l'une des revendications 3 à 7, caractérisé en ce qu'il comporte un moyen d'alerte (50) du déblocage de la masse mobile (20).

9. Dispositif (4) avertisseur du sous-gonflage d'un pneumatique selon la revendication 2, caractérisé en ce que le moyen de décentrement comprend :
- un corps fixe (71) tubulaire disposé en spirale autour d'un point O dans lequel peut se déplacer un corps mobile (72) et qui est raccordé, du côté de son extrémité la plus proche dudit point O, à une chambre (73) reliée au pneumatique et ayant une pression égale à la pression de gonflage dudit pneumatique ;
- un moyen de verrouillage (90) de ladite masse mobile (72) tel que ladite masse mobile (72) soit bloquée, lorsque la pression de gonflage du pneumatique est supérieure à un seuil donné, et soit libérée, de façon à pouvoir se décentrer, lorsque la pression de gonflage est inférieure audit seuil.

10. Système avertisseur du sous-gonflage d'un pneumatique, caractérisé en ce que le dispositif (1, 2, 3) selon l'une des revendications 1 à 8 est monté sur le disque de roue d'un pneumatique de telle sorte que, la masse mobile (20) étant en position bloquée, le centre de gravité dudit dispositif (1, 2, 3) soit placé sur l'axe de la roue dudit pneumatique.

11. Système avertisseur du sous-gonflage d'un pneumatique, caractérisé en ce que le dispositif (4) selon l'une des revendications 1, 2 et 9 est monté entre la jante et le disque de roue d'un pneumatique de telle sorte que, la masse mobile (72) étant en position bloquée, le centre de gravité dudit dispositif (4) soit placé sur l'axe de la roue dudit pneumatique.

12. Système (5) avertisseur du sous-gonflage d'un pneumatique, caractérisé en ce que le dispositif (1, 2, 3, 4) selon l'une des revendications 1 à 9 est utilisé selon l'une des revendications 10 et 11 en combinaison avec un capteur de vibrations (61) placé sur le porte-roue (62) de la roue dudit pneumatique.

13. Roue comportant un dispositif selon l'une quelconque des revendications 1 à 9.

14. Roue selon la revendication 13, caractérisée en ce que le centre de gravité du dispositif (1, 2, 3, 4) avertisseur du sous-gonflage d'un pneumatique est placé sur l'axe de ladite roue lorsque la masse mobile dudit dispositif (1, 2, 3, 4) est en position bloquée.

## Claims

1. A device (1, 2, 3, 4) for warning of the under-inflation of a pneumatic tyre, to be mounted on the wheel of said tyre, characterised in that it creates an imbalance in said wheel when the inflation pressure of the tyre is below a given threshold.

2. A device (1, 2, 3, 4) for warning of the under-inflation of a pneumatic tyre according to Claim 1, characterised in that it comprises means for off-centring a centrifugal mass (20) when the inflation pressure of said tyre is below a given threshold.

3. A device (1, 2, 3) for warning of the under-inflation of a pneumatic tyre according to Claim 2, characterised in that the off-centring means comprises:
- a stationary element (10) having two chambers (11, 12) separated by a centrifugal mass (20), the first of said chambers (11) being connected to the tyre and having a pressure equal to the inflation pressure of said tyre, and the second (12) being at atmospheric pressure;
- a means (30) for blocking said contrifugal mass (20) such that said centrifugal mass (20) is blocked when the inflation pressure of the tyre is greater than a given threshold, and is freed so as to be able to become off-centred when the inflation pressure is less than said threshold.

4. A device (1, 2, 3) for warning of the under-inflation of a pneumatic tyre according to Claim 3, characterised in that, the centrifugal mass (20) being in the blocked position, the centre of gravity of said centrifugal mass (20) is offset relative to the centre of gravity of the device (1) on the side of the pressurised chamber (11).

5. A device (1, 2, 3) for warning of the underinflation of a pneumatic tyre according to Claim 4, characterised in that the centrifugal mass (20) has, in a plane including the axis of displacement, a U-shaped straight section, and in that the blocking means (30) of the centrifugal mass (20) comprises:
- at least one ball (31), placed in the wall of the centrifugal mass (20) which extends along the axis of displacement, and with a diameter greater than the thickness of said wall, the housing (32) of which makes it possible for the ball to form a tangent internally and externally to said wall of the centrifugal mass (20);
- at least one recess (33) made in the wall of the stationary element (10) at such a position that it enables said ball (31) can be embedded on the inside when the centrifugal mass (20) is flattened against the bottom (17) of the stationary element (1) on the side of the atmospheric chamber (12) and when said ball (31) is tangent to the inside surface of the wall of said centrifugal mass (20);
- an elastic membrane (34) connected in an airtight manner to the ends (35) of the centrifugal mass (20), on the side of the chamber (11) the internal pressure of which is the inflation pressure, and ended by a blocking part (36) the outside geometry of which is matched to that of the bottom (21) of the centrifugal mass (20), having a height such that, when it is placed against the bottom (21) of said centrifugal mass (20), it covers the housing (32) of the ball (31).

6. A device (2) for warning of the under-inflation of a pneumatic tyre according to one of Claims 1 to 5, characterised in that it includes a means (40) for limiting the inflation pressure of said tyre during inflation.

7. A device (2) for warning of the under-inflation of a pneumatic tyre according to Claims 5 and 6, characterised in that the blocking part (36) of the centrifugal mass (20) comes to rest on the end of a rod (44) the other end of which ends in a needle valve (42) for closing of the duct (41) for intake of the inflation air of the tyre, and thus blocks said duct (41) when the inflation pressure reaches the nominal pressure of said tyre.

8. A device (3) for warning of the under-inflation of a pneumatic tyre according to one of Claims 3 to 7, characterised in that it comprises a means (50) for warning of the freeing of the centrifugal mass (20).

9. A device (4) for warning of the under-inflation of a pneumatic tyre according to Claim 2, characterised in that the off-centring means comprises:
- a tubular stationary element (71) placed spirally around a point O in which a mobile element (72) can be displaced and which is connected, at its end closest to said point O, to a chamber (73) connected to the tyre and having a pressure equal to the inflation pressure of said tyre;
- a means (90) for blocking said centrifugal mass (72) such that said centrifugal mass (72) is blocked when the inflation pressure of the tyre is greater than a given threshold, and is freed so as to be able to become off-centred when the inflation pressure is less than said threshold.

10. A system for warning of the under-inflation of a pneumatic tyre, characterised in that the device (1, 2, 3) according to one of Claims 1 to 8 is mounted on the wheel disc of a tyre such that, the centrifugal mass (20) being in the blocked position, the centre of gravity of said device (1, 2, 3) is placed on the axis of the wheel of said tyre.

11. A system for warning of the under-inflation of a pneumatic tyre, characterised in that the device (4) according to one of Claims 1, 2 and 9 is mounted between the rim and the wheel disc of a tyre such that, the centrifugal mass (72) being in the blocked position, the centre of gravity of said device (4) is placed on the axis of the wheel of said tyre.

12. A system (5) for warning of the under-inflation of a pneumatic tyre, characterised in that the device (1, 2, 3, 4) according to one of Claims 1 to 9 is used according to one of Claims 10 and 11 in combination with a vibration sensor (61) placed on the wheel carrier (62) of the wheel of said tyre.

13. A wheel comprising a device according to any one of Claims 1 to 9.

14. A wheel according to Claim 13, characterised in that the centre of gravity of the device (1, 2, 3, 4) for warning of the under-inflation of a pneumatic tyre is placed on the axis of said wheel when the centrifugal mass of said device (1, 2, 3, 4) is in the blocked position.

## Patentansprüche

1. Warnvorrichtung (1, 2, 3, 4) für den ungenügenden Druck eines Reifens zur Anbringung am Rad des genannten Reifens, dadurch **gekennzeichnet**, daß sie eine Unwucht auf der Höhe des genannten Rades erzeugt, wenn der Aufpumpdruck des Reifens unter einer vorgegebenen Schwelle liegt.

2. Warnvorrichtung (1, 2, 3, 4) für den ungenügenden Druck eines Reifens nach Anspruch 1, dadurch **gekennzeichnet**, daß sie Mittel zur Aufhebung der Zentrierung einer beweglichen Masse (20) aufweist, wenn der Aufpumpdruck des genannten Reifens unter einer gegebenen Schwelle liegt.

3. Warnvorrichtung (1, 2, 3) für den ungenügenden Druck eines Reifens nach Anspruch 2, dadurch **gekennzeichnet**, daß die Mittel zur Aufhebung der Zentrierung die folgenden Merkmale aufweisen:
- ein fester Körper (10), der zwei durch eine bewegliche Masse (20) getrennte Kammern (11, 12) aufweist, wobei die erste der genannten Kammern (11) mit einem Reifen verbunden ist und einen Druck aufweist, der gleich ist dem Aufpumpdruck des genannten Reifens, und die zweite (12) sich bei Atmosphärendruck befindet; und
- Verriegelungsmittel (30) für die genannte bewegliche Masse (20), derart, daß die genannte bewegliche Masse (20) blockiert sein soll, wenn der Aufpumpdruck des Reifens über einer vorgegebenen Schwelle liegt, und derart freigegeben sein soll, daß sie sich außer Zentrierung versetzen kann, wenn der Aufpumpdruck unter der genannten Schwelle liegt.

4. Warnvorrichtung (1, 2, 3) für den ungenügenden Druck eines Reifens nach Anspruch 3, dadurch **gekennzeichnet**, daß, wenn die bewegliche Masse (20) sich in der blockierten Lage befindet, der Schwerpunkt der genannten beweglichen Masse (20) in bezug auf den Schwerpunkt der Vorrichtung (1) zur Seite der unter Druck gesetzten Kammer (11) verschoben ist.

5. Warnvorrichtung (1, 2, 3) für den ungenügenden Druck eines Reifens nach Anspruch 4, dadurch **gekennzeichnet**, daß die bewegliche Masse (20) in einer Ebene, die die Versetzungsachse aufweist, einen geraden, U-förmigen Schnitt aufweist, und daß die Verriegelungsmittel (30) der beweglichen Masse (20) folgende Merkmale aufweisen:
- mindestens eine Kugel (31), die in der Wand der beweglichen Masse (20) angeordnet ist, die längs der Versetzungsachse ausgerichtet ist, mit einem Durchmesser, der größer ist als die Dicke der genannten Wand, und deren Sitz (32) es gestattet, daß sie zur Tangierung der Innen- und Außenseite der genannten Wand der beweglichen Masse (20) gelangt;
- mindestens eine Aussparung (33), der in der Wand des festen Körpers (10) in einer solchen Lage ausgebildet ist, daß sie es der genannten Kugel (31) gestattet, sich in die Innenseite hineinzuversetzen, wenn die bewegliche Masse (20) gegen den Boden (17) des festen Körpers (10) auf der Seite der atmosphärischen Kammer (12) anliegt und wenn die genannte Kugel (31) die Innenoberfläche der Wand der genannten beweglichen Masse (20) tangiert; und
- eine elastische Membran (34), die dicht mit den Enden (35) der beweglichen Masse (20) auf der Seite der Kammer (11) verbunden ist, deren Innendruck der Aufpumpdruck ist, beendet durch ein Blockierungsstück (36), dessen Außengeometrie an die des Bodens (21) der beweglichen Masse (20) angepaßt ist, mit einer solchen Höhe, daß, wenn sie gegen den Boden (21) der beweglichen Masse (20) aufsitzt, sie den Sitz (32) der Kugel (31) abdeckt.

6. Warnvorrichtung (2) für den ungenügenden Druck eines Reifens nach einem der Ansprüche 1 bis 5, dadurch **gekennzeichnet**, daß er Mittel zur Begrenzung des Aufpumpdruckes (14) während des Aufpumpens des genannten Reifens aufweist.

7. Warnvorrichtung (2) für den ungenügenden Druck eines Reifens nach den Ansprüchen 5 und 6, dadurch **gekennzeichnet**, daß das Sperrstück (36) der beweglichen Masse (20) zur Anlage gegen das Ende einer Stange (44) gelangt, dessen anderes Ende in einer Düsennadel (42) zum Verschließen der Ankunftsleitung (41) für die Aufpumpluft des Reifens endet und so die genannte Leitung (41) sperrt, wenn der Aufpumpdruck den Nenndruck des genannten Reifens erreicht.

8. Warnvorrichtung (3) für den ungenügenden Druck eines Reifens nach einem der Ansprüche 3 bis 7, dadurch **gekennzeichnet**, daß er Alarmmittel (50) zum Aufheben der Sperrung der beweglichen Masse (20) aufweist.

9. Warnvorrichtung (4) für den ungenügenden Druck eines Reifens nach Anspruch 2, dadurch **gekennzeichnet**, daß die Mittel zur Aufhebung der Zentrierung die folgenden Merkmale aufweisen:
- einen festen, rohrförmigen Körper (71), der spiralig um einen Punkt O herum angeordnet ist, in dem sich ein beweglicher Körper (72) verlagern kann und der auf der Seite seines dem genannten Punkt O nächstgelegenen Endes mit einer Kammer (73) verbunden ist, die an den Reifen angeschlossen ist und einen Druck aufweist, der gleich ist dem Aufpumpdruck des genannten Reifens; und
- Verriegelungsmittel (90) für die genannte bewegliche Masse (72) derart, daß die genannte bewegliche Masse (72) blockiert sein soll, wenn der Aufpumpdruck des Reifens größer ist als eine vorgegebene Schwelle, und derart freigesetzt sein soll, daß sie sich außer Zentrierung versetzen kann, wenn der Aufpumpdruck kleiner ist als die genannte Schwelle.

10. Warnsystem für den ungenügenden Druck eines Reifens, dadurch **gekennzeichnet**, daß die Vorrichtung (1, 2, 3) gemäß einem der Ansprüche 1 bis 8 auf der Radscheibeeines Reifens derart angebracht ist, daß, wenn sich die bewegliche Masse (20) in der gesperrten Lage befindet, der Schwerpunkt der genannten Vorrichtung (1, 2, 3) auf der Achse des Rades des genannten Reifens liegen soll.

11. Warnsystem für den ungenügenden Druck eines Reifens, dadurch **gekennzeichnet**, daß die Vorrichtung (4) nach einem der Ansprüche 1, 2 und 9 zwischen der Felge und der Scheibe des Rades eines Reifens derart angebracht ist, daß, wenn sich die bewegliche Masse (72) in gesperrter Lage befindet, der Schwerpunkt der genannten Vorrichtung (4) auf der Achse des Rades des genannten Reifens liegen soll.

12. Warnsystem (5) für den ungenügenden Druck eines Reifens, dadurch **gekennzeichnet**, daß die Vorrichtung (1, 2, 3, 4) gemäß einem der Ansprüche 1 bis 9 nach einem der Ansprüche 10 und 11 in Kombination mit einem Schwingungsmeßfühler (61) benutzt wird, der auf dem Radträger (62) des Rades des genannten Reifens angeordnet ist.

13. Rad mit einer Vorrichtung nach irgendeinem der Ansprüche 1 bis 9.

14. Rad nach Anspruch 13, dadurch **gekennzeichnet**, daß der Schwerpunkt der Warnvorrichtung (1, 2, 3, 4) für den ungenügenden Druck eines Reifens auf der Achse des genannten Rades angeordnet ist, wenn sich die bewegliche Masse der genannten Vorrichtung (1, 2, 3, 4) in gesperrter Lage befindet.
